# EUROPEAN PATENT SPECIFICATION

(11) **EP 1 881 172 B1**
(45) Date of publication and mention of the grant of the patent: **15.01.2014**
(21) Application number: 07014119.7
(22) Date of filing: 18.07.2007
(51) Int. Cl.: F02B 27/02

(54) **Intake control device**
Einlasssteuerungsvorrichtung
Dispositif de commande d'admission

(30) Priority: 20.09.2006 JP 2006255049; 20.07.2006 JP 2006197883
(43) Date of publication of application: 23.01.2008
(73) Proprietor: Yamaha Hatsudoki Kabushiki Kaisha, Shizuoka-ken Shizuoka 438-8501 (JP)
(72) Inventor: Noborio, Daichi, Iwata-shi, Shizuoka-ken 438-8501 (JP); Akatsuka, Hidenori, Iwata-shi, Shizuoka-ken 438-8501 (JP)
(74) Representative: Grünecker, Kinkeldey, Stockmair & Schwanhäusser

(56) References cited:
- DE-A1- 19 634 913
- JP-A- 4 183 952
- JP-A- 5 010 140
- US-B1- 6 408 810

## Description

The present invention relates to an intake control device for a straddle-type vehicle according to the preamble of independent claim 1 and to a method for controlling a length of an intake pipe connected to an engine of a straddle-type vehicle. Such an intake control device for a straddle-type vehicle and such a method for controlling a length of an intake pipe connected to an engine of a straddle-type vehicle can be taken from the prior art document DE 196 34 913 A1. Said prior art document indicates a so-called peak and hold characteristic curve for moving the intake pipe. Said curve indicates relative high voltage for connecting the pipe and reduced voltage for maintaining of the pipe element in the connected position. Reverse voltage is provided for disconnection, and there is also applied reduced voltage for maintaining said disconnected position.

Conventionally, an intake control device is known, which varies a length of an intake pipe connected to an engine to change an intake efficiency to change an output characteristic of the engine. For example, when the engine is low in rotating speed, the intake control device lengthens an intake pipe length to cause the engine to output high torque in low speed rotation. Also, when the rotating speed is high, the intake pipe length is shortened to cause the engine to output high torque in high speed rotation.

Some intake control devices comprise a moving intake pipe moved between a connected position, in which it is connected to a stationary intake pipe connected to an intake port of an engine, and a separated position, in which it is separated from the stationary intake pipe, by a driving force of an actuator (see, for example, Patent Document 1). Such intake control devices comprise a potentiometer for detection of a position of the moving intake pipe, and detects positional deviation of the moving intake pipe, which is caused by, for example, vibrations in traveling, on the basis of a detected value of the potentiometer to correct a position of the moving intake pipe.
Patent Document 1: Patent Specification No. 3104602

Since the conventional intake control device controls the actuator on the basis of a detected value of the potentiometer, however, there is caused a problem that a processing for control becomes complex.

The invention has been thought of in view of the problem and has its main object to provide an intake control device for a straddle-type vehicle and a method for controlling a length of an intake pipe connected to an engine of a straddle-type vehicle capable of controlling an actuator in a simple processing.

According to the present invention said object is solved by an intake control device for a straddle-type vehicle having the features of independent claim 1. Preferred embodiments are laid down in the dependent claims. Moreover, said object is also solved by a method for controlling a length of an intake pipe connected to an engine of a straddle-type vehicle having the features of independent claim 11.

Accordingly, it is provided an intake control device for a straddle-type vehicle comprising a stationary intake pipe contiguous to an intake port of an engine, a moving intake pipe configured to move relative to the stationary intake pipe, an actuator configured to displace the moving intake pipe, a control unit configured to control driving of the actuator, and a means to inhibit the moving intake pipe from moving beyond a set position, which is set beforehand, wherein the control unit is configured to drive the actuator so that the moving intake pipe in the set position is further energized in the direction towards the set position.

Preferably, the set position is a connected position, in which the moving intake pipe is connected to the stationary intake pipe, the moving intake pipe is provided to be movable in a direction of connection, in which it approaches the stationary intake pipe, and to be inhibited from moving beyond the connected position, and the control means is configured to drive the actuator so that the moving intake pipe in the connected position is further energized in the direction of connection.

According to another preferred embodiment, the intake control device further comprises a stopper, which is provided to inhibit the moving intake pipe from moving beyond the connected position.

Preferably, the set position is a separated position separated from the stationary intake pipe, the moving intake pipe is provided to be movable in a direction of separation, in which it separates from the stationary intake pipe, and to be inhibited from moving beyond the separated position, and the control means is configured to drive the actuator so that the moving intake pipe in the separated position is energized in the direction of separation.

According to a further preferred embodiment, the intake control device further comprises a stopper provided to inhibit the moving intake pipe from moving beyond the separated position.

Preferably, when the moving intake pipe is arranged in the set position and is to be energized in the direction of the set position, the control means is configured to drive the actuator so that a smaller driving force than that when the moving intake pipe is moved in the direction of movement is output.

Further, the control means is configured to drive the actuator so that the moving intake pipe in the set position is intermittently energized in the direction of the set position.

According to yet another preferred embodiment, the intake control device further comprises traveling state detecting means provided to detect a traveling state of a vehicle, wherein the control means is configured to drive the actuator at time intervals determined on the basis of a traveling state of the vehicle detected by the traveling state detecting means.

Preferably, the moving intake pipe is provided to be movable in a direction of connection, in which it approaches the stationary intake pipe, and in a direction of separation, in which it separates from the stationary intake pipe, and the control means is configured to drive the actuator so that the moving intake pipe is moved in the direction of separation when an operation of the intake control device is terminated.

Further, preferably the moving intake pipe is provided to be movable between a connected position, in which it is connected to the stationary intake pipe, and a separated position, in which it is separated from the connected position, and the control means is configured to drive the actuator so that the moving intake pipe is arranged between the connected position and the separated position when an operation of the intake control device is terminated.

There is further provided a straddle-type vehicle comprising the intake control device according to one of the above embodiments.

For the method aspect, it is provided a method for controlling a length of an intake pipe connected to an engine of a straddle-type vehicle, said intake control device comprising a stationary intake pipe contiguous to an intake port of the engine, a moving intake pipe which moves relative to the stationary intake pipe, and an actuator which displaces the moving intake pipe, wherein the moving intake pipe is inhibited from moving beyond a set position, which is set beforehand, and, when the moving intake pipe is in the set position, the actuator is further intermittently energized so that the moving intake pipe is maintained in the set position.

In the following, the present invention is explained in greater detail with respect to several embodiments thereof in conjunction with the accompanying drawings, wherein:
- Fig. 1: is a side view showing a motorcycle mounting thereon an intake control device according to an embodiment,
- Fig. 2: is a view showing the construction of an intake pipe length varying mechanism provided on the intake control device,
- Fig. 3: is a plan view showing the intake pipe length varying mechanism,
- Fig. 4: is a cross sectional view taken along the line IV-IV in Fig. 3. In the figure, moving intake pipes provided on the intake pipe length varying mechanism are separated from stationary intake pipes,
- Fig. 5: is a cross sectional view taken along the line IV-IV in Fig. 3. In the figure, the moving intake pipes are connected to the stationary intake pipes,
- Fig. 6: is a front view showing an actuator (a view seen from a side of the stationary intake pipes),
- Fig. 7: is a cross sectional view showing a moving member,
- Fig. 8: is a functional block diagram of a control unit provided on the intake control device,
- Fig. 9: is a flowchart illustrating a processing executed by the control unit,
- Fig. 10: is a functional block diagram illustrating a further example of an processing executed by the control unit,
- Fig. 11: is a view illustrating a connection energizing control table,
- Fig. 12: is a view illustrating a separation energizing control table,
- Fig. 13: is a flowchart illustrating an example of a processing executed by a connected state maintaining unit of the control unit, and
- Fig. 14: is a flowchart illustrating an example of a processing executed by a separated state maintaining unit of the control unit.

### Description of Reference Numerals and Signs:

1: motorcycle, 3: body frame, 4: steering shaft, 5: swing arm, 7: air cleaner, 8: exhaust pipe, 9: sound arrester, 10: intake control device, 11: control unit (control means), 11c: connected state maintaining unit, 11e: separated state maintaining unit, 11g: terminating occasion separating operation unit, 12: storage unit, 13: actuator drive circuit, 14: intake pipe length varying mechanism, 15: holding circuit, 16: engine control unit, 18: main switch, 21: actuator, 22: upper lever, 22c: projection (stopper), 22d: projection (stopper), 23: lower lever, 24: moving member, 25: connecting member, 26: arm, 29: transmission mechanism, 30: moving intake pipe, 32: upper supported shaft, 33: lower supported shaft, 35: sealing member, 40: stationary intake pipe, 41: column portion, 42: upper support shaft, 43: lower support shaft, 47: injector, 48: throttle position sensor, 49: throttle body, 50: engine, 50b: intake port, 51: cylinder, 52: piston, 53: connecting rod, 54: crank shaft, 55: fly wheel, 56: crank case, 57: crank angle sensor (traveling state detecting means), X: separated position, Y: connected position
FIG. 2
   11: Control Unit
   12: Storage Unit
   13: Actuator Drive Circuit
   15: Holding Circuit
   18: Main Switch
FIG. 8
   11a: Starting Occasion Connecting Operation Unit
   11b: Normal Occasion Processing Unit
   11c: Connected State Maintaining Unit
   11d: Separating Operation Unit
   11e: Separated State Maintaining Unit
   11f: Connecting Operation Unit
   11g: Terminating Occasion Separating Operation Unit
FIG. 9
   START
   S101: Starting Occasion Connecting Operation
   S102: Energize Moving Intake Pipes In Direction Of Connection
   S103: Is Separating Operation Starting Condition Met?
   S104: Is Main Switch Made Off?
   S105: Move Moving Intake Pipes In Direction Of Separation
   S106: Energize Moving Intake Pipes In Direction Of Separation
   S107: Is Connecting Operation Starting Condition Met?
   S108: Is Main Switch Made Off?
   S109: Move Moving Intake Pipes In Direction Of Connection
   S110: Energize Moving Intake Pipes In Direction Of Connection
   S111: Is Separating Operation Starting Condition Met?
   S112: Is Main Switch Made Off?
   S113: Terminating Occasion Separating Operation
   END
FIG. 10
   11a: Starting Occasion Connecting Operation Unit
   11b: Normal Occasion Processing Unit
   11c: Connected State Maintaining Unit
   11d: Separating Operation Unit
   11e: Separated State Maintaining Unit
   11f: Connecting Operation Unit
   11g: Terminating Occasion Separating Operation Unit
   11h: Connection Energizing Time Control Unit
   11i: Separation Energizing Time Control Unit
FIG. 11
   Engine Rotating Speed
   Connection Energizing Stoppage Time (SEC)
FIG. 12
   Engine Rotating Speed
   Separation Energizing Stoppage Time (SEC)
FIG. 13
   START
   S201: Drive Actuator For Connecting Direction Energizing Time
   S202: Detect Engine Rotating Speed
   S203: Acquire Connection Energizing Stoppage Time
   S204: Stop Driving Of Actuator For Connection Energizing Stoppage Time
   END
Fig. 14
   START
   S301: Drive Actuator For Separating Direction Energizing Time
   S302: Detect Engine Rotating Speed
   S303: Acquire Separation Energizing Stoppage Time
   S304: Stop Driving Of Actuator For Separation Energizing Stoppage Time
   END

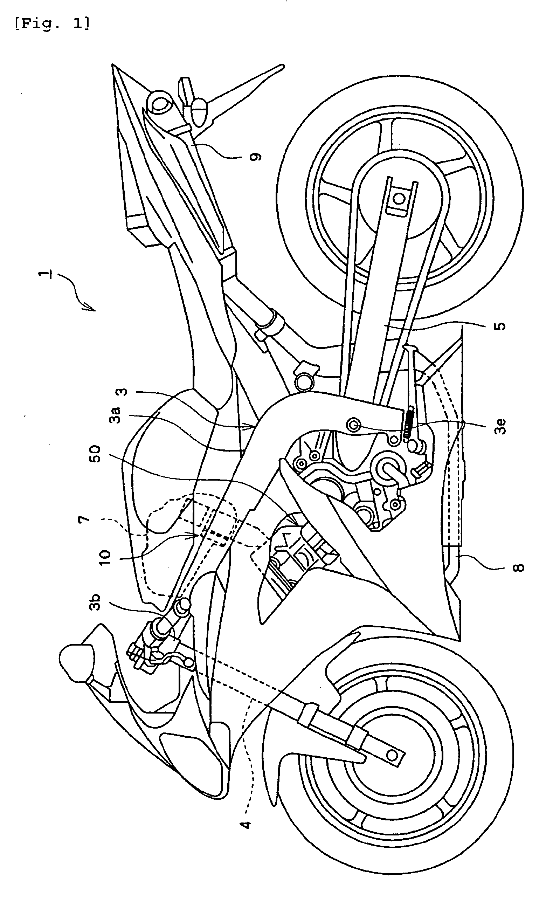

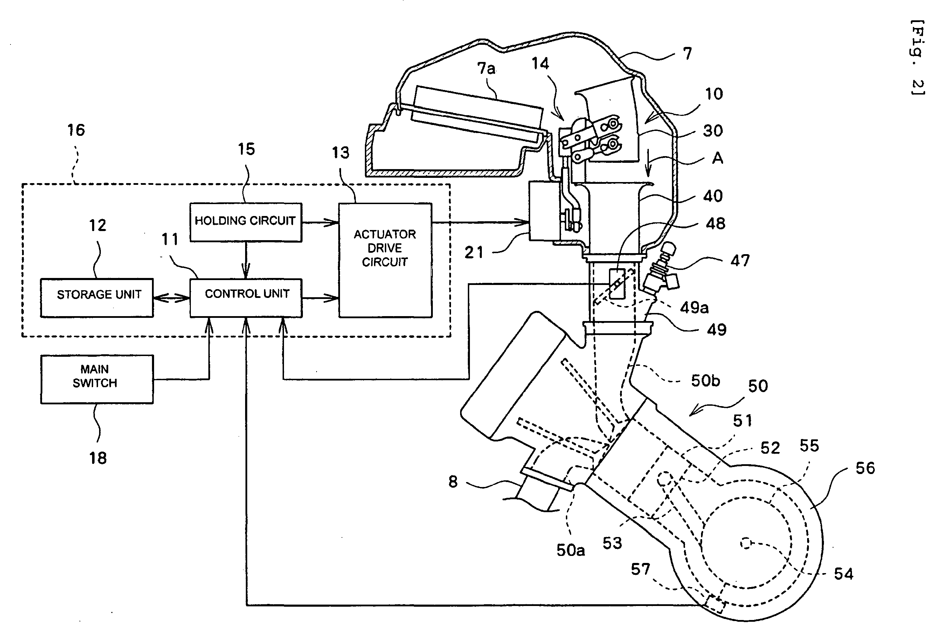

An embodiment of the present teaching will be described with reference to the drawings. Fig. 1 is a side view showing a motorcycle 1 provided with an intake control device 10 according to the embodiment, and Fig. 2 is a view showing the construction of an engine 50 and the intake control device 10.

As shown in Fig. 1, the motorcycle 1 includes a body frame 3, the intake control device 10, and the engine 50. Also, as shown in Fig. 2, the intake control device 10 includes a control unit 11, a storage unit 12, an actuator drive circuit 13, an intake pipe length varying mechanism 14, and a holding circuit 15.

As shown in Fig. 1, the body frame 3 includes a main frame 3a and a steering head portion 3b is provided on a front end of the main frame 3a to support a steering shaft 4. The main frame 3a extends obliquely downward toward the rear of a vehicle body from the steering head portion 3b. A swing arm 5 is mounted to a rear end of the main frame 3a to be able to swing vertically about a pivot shaft 3e.

The engine 50 is arranged below the main frame 3a. As shown in Fig. 2, the engine 50 is formed with exhaust ports 50a and exhaust pipes 8 are connected to the exhaust ports 50a. Rear ends of the exhaust pipes 8 are accommodated in a sound arrester 9 (see Fig. 1). Also, intake ports 50b are formed on the engine 50 and throttle bodies 49 are connected to the intake ports 50b. Injectors 47 are mounted to the throttle bodies 49 to jet a fuel into intake passages of the throttle bodies 49. Also, throttle valves 49a are arranged in the intake passages of the throttle bodies 49. Throttle position sensors 48 are mounted to sides of the throttle bodies 49 to detect throttle opening degrees. The throttle position sensors 48 output to the control unit 11 voltage signals, which correspond to throttle opening degrees, as throttle opening degree signals.

An air cleaner 7 is arranged above the engine 50 and an air having passed through a filter 7a of the air cleaner 7 to be purified flows into the throttle bodies 49. In addition, moving intake pipes 30 and stationary intake pipes 40, which are described later, are accommodated in the air cleaner 7. An air introduced into the air cleaner 7 passes through the stationary intake pipes 40, or both the stationary intake pipes 40 and the moving intake pipes 30 to flow into the throttle bodies 49. Also, an air duct (not shown) is connected to the air cleaner 7 and an air inflows from the air duct.

Pistons 52 are accommodated in cylinders 51 of the engine 50. Upper ends of connecting rods 53 are mounted to the pistons 52 and lower ends thereof are mounted to a crank shaft 54. A fly wheel 55 is mounted to the crank shaft 54. A plurality of projections (not shown) aligned at equal intervals in a circumferential direction are formed on an outer peripheral surface of the fly wheel 55. A crank angle sensor 57 is mounted to a crank case 56 to face the outer peripheral surface of the fly wheel 55. Whenever the projection of the fly wheel 55 comes to the front, the crank angle sensor 57 outputs to the control unit 11 a signal (referred below to as crank angle signal), which informs such coming. The control unit 11 detects the rotating speed of the engine 50 on the basis of that frequency, at which a crank angle signal is input. In addition, an explanation is given herein assuming that the engine 50 is a four-cylinder engine and four cylinders 51 are aligned in a vehicle width direction.

As described above, the intake control device 10 includes the control unit 11, the storage unit 12, the actuator drive circuit 13, the intake pipe length varying mechanism 14, and the holding circuit 15. The intake pipe length varying mechanism 14 includes the moving intake pipes 30, an actuator 21, which displaces the moving intake pipes 30, and stationary intake pipes 40. In addition, the control unit 11, the storage unit 12, the actuator drive circuit 13, and the holding circuit 15 are mounted as an engine control unit 16 on a vehicle body.

The control unit 11 includes a CPU (Central Processing Unit) to control various electrical equipment mounted on the vehicle body according to a program stored in the storage unit 12. According to the embodiment, a processing is performed, in which an intake pipe length is varied by driving the actuator 21 to displace the moving intake pipes 30 according to an operating state such as the rotating speed of the engine 50, a throttle manipulation made by a passenger, etc. The processing executed by the control unit 11 will be described below in detail.

The storage unit 12 comprises a nonvolatile memory to preserve a program being executed by the control unit 11. The actuator drive circuit 13 supplies the actuator 21 with that electric power, which corresponds to a signal input from the control unit 11. The holding circuit 15 supplies the control unit 11 and the actuator drive circuit 13 with electric power of a battery (not shown) for a predetermined period of time after a main switch 18 is made OFF.

The moving intake pipes 30 move relative to the stationary intake pipes 40 between a connected position, in which they are connected to the stationary intake pipes 40, and a separated position separated from the connected position to vary an intake pipe length. Here, the connected position and the separated position are ones preset corresponding to an intake pipe length being to be set, such that in the case where the moving intake pipes 30 are present in the connected position, the intake pipe length is set to be long and in the case where the moving intake pipes 30 are present in the separated position, the intake pipe length is set to be short.

The actuator 21 includes a DC motor and is driven by dc power fed from the actuator drive circuit 13 to move the moving intake pipes 30 in a direction of connection (a direction denoted by A in Fig. 2) toward the connected position from the separated position, or in a direction of separation toward the separated position from the connected position.

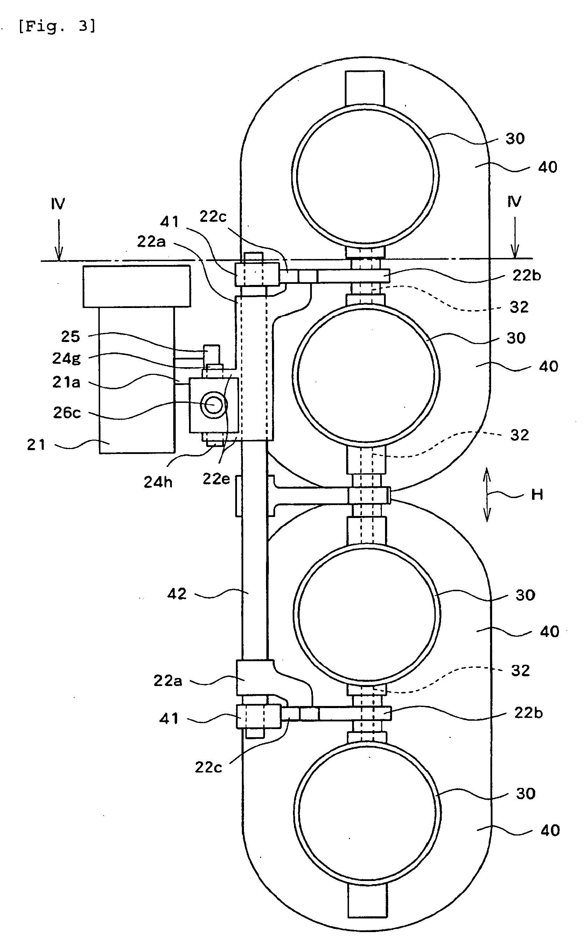

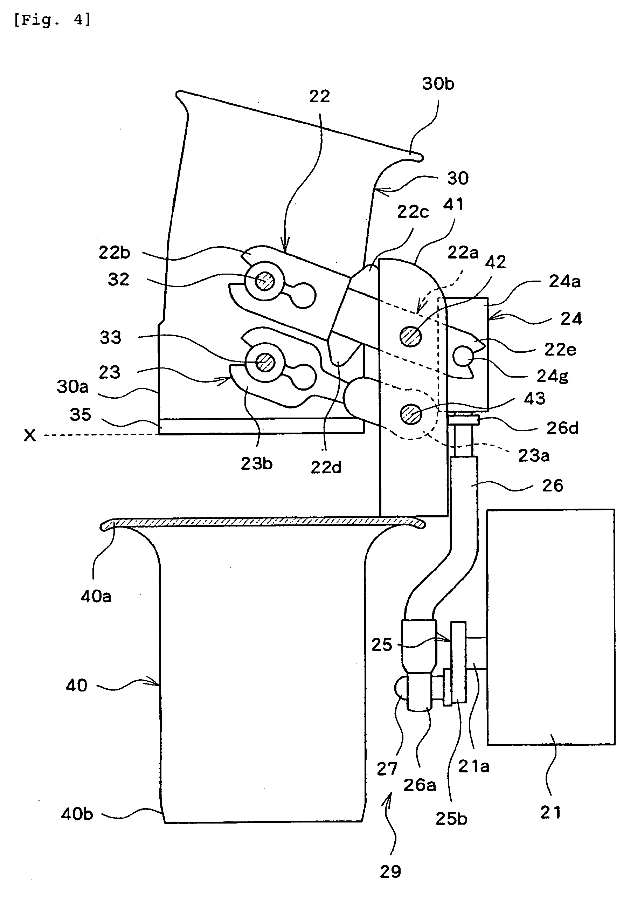

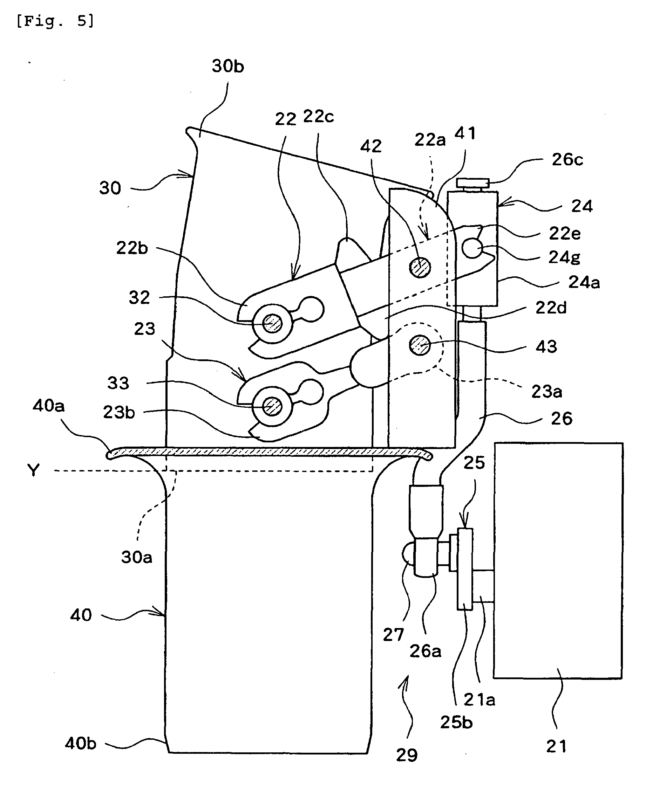

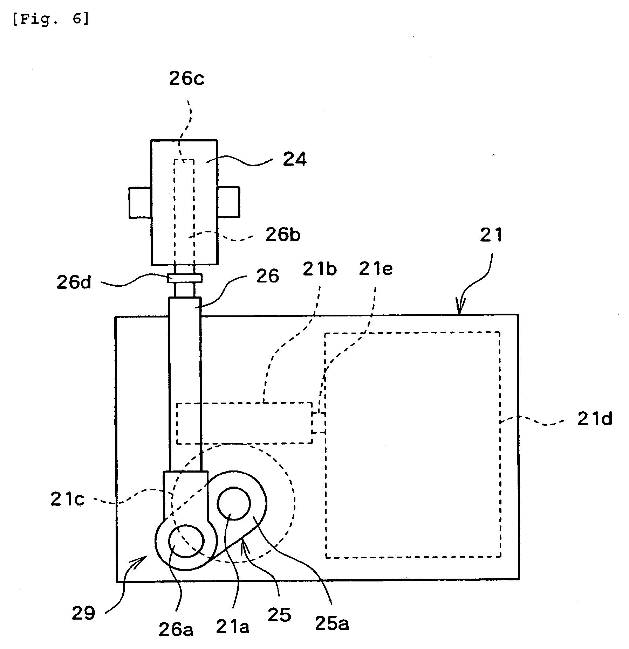

Here, a detailed explanation is given to the construction of the intake pipe length varying mechanism 14. Fig. 3 is a plan view showing the intake pipe length varying mechanism 14. Figs. 4 and 5 are cross sectional views taken along the line IV-IV in Fig. 3, and Fig. 6 is a front view showing the actuator 21 (a view seen from a side of the stationary intake pipes 40). In addition, Fig. 4 shows a state, in which the moving intake pipes 30 are present in a separated position X, and Fig. 5 shows a state, in which the moving intake pipes 30 are present in a connected position Y.

As shown in Fig. 4, the stationary intake pipes 40 are formed to be cylindrical-shaped and ends 40a thereof on an intake side are formed to be funnel-shaped. The other ends 40b of the stationary intake pipes 40 are connected to the throttle bodies 49 (see Fig. 2). Column portions 41 upright on a side of the moving intake pipes 30 are formed at the ends 40a of the stationary intake pipes 40. As described later, the column portions 41 support upper levers 22 and lower levers 23, which transmit a drive force of the actuator 21 to the moving intake pipes 30.

In addition, here, as shown in Fig. 3, four stationary intake pipes 40 and moving intake pipes 30 are arranged to be aligned in the vehicle width direction (a direction denoted by H in the figure) and the respective stationary intake pipes 40 are connected to the throttle bodies 49 provided on the respective cylinders. Also, the column portions 41 of the stationary intake pipes 40 are formed between the two adjacent stationary intake pipes 40.

The moving intake pipes 30 are formed to be cylindrical-shaped and one ends 30a thereof are slightly smaller in outside diameter than funnel-shaped ends 40a of the stationary intake pipes 40. Annular sealing members (for example, rubber lips) 35 having an elasticity are mounted to outer peripheries of the ends 30a, the sealing members 35 sealing clearances between the ends 30a of the moving intake pipes 30 arranged in the connected position Y and the stationary intake pipes 40. In addition, the other ends 30b of the moving intake pipes 30 are formed to be funnel-shaped.

Upper supported shafts 32 and lower supported shafts 33, which are parallel to each other, bridge sides of the two adjacent moving intake pipes 30. The upper supported shafts 32 are supported by the upper levers 22 and the lower supported shafts 33 are supported by the lower levers 23.

The upper levers 22 are able to move vertically about an upper support shaft 42 supported by the column portions 41 and the lower levers 23 are likewise able to move vertically about a lower support shaft 43 supported by the column portions 41.

Specifically, the upper support shaft 42 and the lower support shaft 43, respectively, extend in the vehicle width direction and are arranged in parallel to the upper supported shafts 32 and the lower supported shafts 33 to bridge the two column portions 41. Intermediate portions 22a of the upper levers 22 are formed with openings and the upper support shaft 42 is inserted through the openings. Also, bases 23a of the lower levers 23 are also formed with openings, through which the lower support shaft 43 is inserted. Thereby, the upper levers 22 and the lower levers 23 turn about the upper support shaft 42 and the lower support shaft 43 and ends 22b, 23b, which grasp the upper supported shafts 32 and the lower supported shafts 33, move vertically in parallel to each other.

In addition, bases 22e of the upper levers 22 are mounted to a moving member 24, which is driven by the actuator 21 to move vertically. The moving member 24 will be described later in detail.

Rotational driving of the actuator 21 is transmitted to the upper levers 22 through a transmission mechanism 29, which converts rotational driving of the actuator 21 into vertically linear driving to transmit the same. As shown in Fig. 6, the transmission mechanism 29 includes a vertically extending and contracting arm 26, a moving member 24 connected to the arm 26 to be displaced vertically, and a connecting member 25, which converts rotational driving of the actuator 21 into vertical driving. One end 25a of the connecting member 25 is connected to an output shaft 21a of the actuator 21 and the connecting member 25 is extended radially of the output shaft 21a. The other end 25b of the connecting member 25 is connected to one end 26a of the arm 26. In addition, the other end 25b and the one end 26a are connected to each other through a connecting shaft 27, which is rotatable relative to the respective ends.

Also, the actuator 21 accommodates therein a DC motor 21d, a worm gear 21b, which rotates coaxially with a rotating shaft 21e of the motor 21d, and a gear 21c, which meshes with the worm gear 21b to transmit a driving force to the output shaft 21a (see Fig. 6).

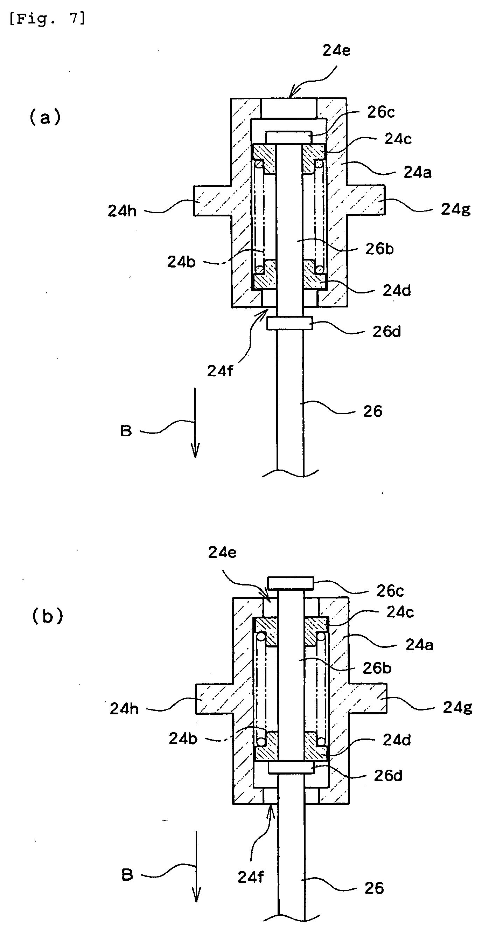

The other end 26b of the arm 26 is connected to the moving member 24. Fig. 7 is a cross sectional view showing the moving member 24. Fig. 7(a) shows a state, in which the arm 26 pulls the moving member 24 downward (a direction denoted by B in Fig. 7) and Fig. 7(b) shows a state, in which the arm 26 pushes the moving member 24 upward.

The moving member 24 includes a box-shaped case 24a and a spring 24b, which biases the case 24a upward or downward. The arm 26 is inserted vertically into the case 24a. The spring 24b is arranged in the case 24a in a manner to surround the arm 26. Engaging members 24c, 24d are arranged at both ends of the spring 24b to engage with the case 24a from inside. Engaging portions 26c, 26d are formed on the arm 26 in a manner to interpose therebetween the engaging member 24c, the spring 24b, and the engaging member 24d.

In the case where the arm 26 pulls the moving member 24 downward, the engaging portion 26c pushes the case 24a downward from inside through the engaging member 24c, the spring 24b, and the engaging member 24d (see Fig. 7(a)). On the other hand, in the case where the arm 26 pushes the moving member 24 upward, the engaging portion 26d pushes the case 24a upward from inside through the engaging member 24d, the spring 24b, and the engaging member 24c (see Fig. 7(b)).

In addition, the case 24a is formed with openings 24e, 24f, through which the engaging portion 26c and the engaging portion 26d go into and out of the case 24a. Also, the case 24a is formed with projections 24g, 24h, which project laterally, and the base 22e of the upper lever 22 is mounted to the projections 24g, 24h (see Figs. 3 and 4).

The intake pipe length varying mechanism 14 includes a stopper mechanism, which inhibits the moving intake pipes 30 from going beyond the connected position Y and the separated position X to be displaced in the direction of connection or the direction of separation. Specifically, the upper levers 22 are formed with projections 22d, which project laterally to abut against the column portions 41 when the moving intake pipes 30 are present in the connected position Y. Also, the upper levers 22 are formed with projections 22c, which project laterally to abut against the column portions 41 when the moving intake pipes 30 are present in the separated position X. When the moving intake pipes 30 are present in the connected position Y or the separated position X, the projections 22c, 22d abut against the column portions 24 to inhibit the upper levers 22 from turning further. In addition, the stopper mechanism is not limited to one described above. For example, a stopper for restriction of a rotating angle of the output shaft 21a of the actuator 21 may be formed around the output shaft 21a.

Subsequently, an operation of the intake pipe length varying mechanism 14 will be described. When the actuator 21 pulls the arm 26 downward, the arm 26 draws the case 24a of the moving member 24 to pull the bases 22e of the upper levers 22 downward. Consequently, until the projections 22c abut against the column portions 41, the upper levers 22 and the lower levers 23 turn about the upper support shaft 42 and the lower support shaft 43 to pull the moving intake pipes 30 upward to displace the same to the separated position X (see Fig. 4).

On the other hand, when the actuator 21 pushes the arm 26 upward, the arm 26 pushes the bases 22e of the upper levers 22 upward through the case 24a. Consequently, until the projections 22d abut against the column portions 41, the upper levers 22 and the lower levers 23 turn about the upper support shaft 42 and the lower support shaft 43 to push the moving intake pipes 30 downward (see Fig. 5). At this time, the moving intake pipes 30 are arranged in the connected position Y and the sealing members 35 abut against the ends 40a of the stationary intake pipes 40.

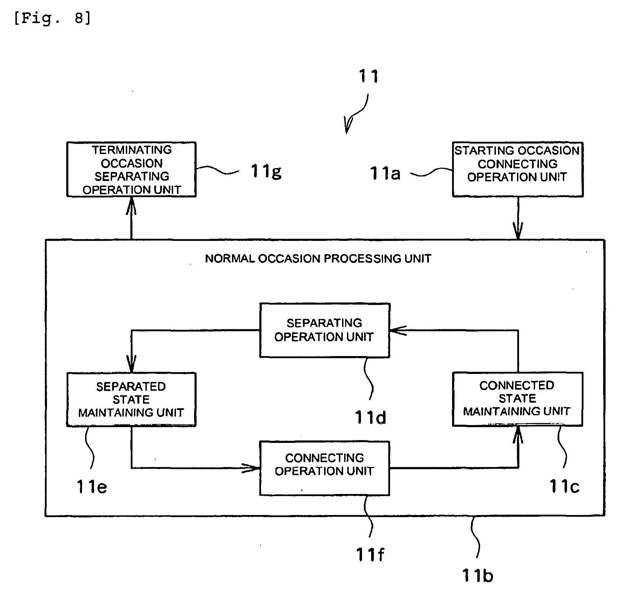

Here, a detailed explanation is given to a processing executed by the control unit 11. As described above, the control unit 11 performs a processing to drive the actuator 21 according to an operating state of a vehicle to vary an intake pipe length. Fig. 8 is a functional block diagram for the processing executed by trio control unit 11. As shown in the figure, the control unit 11 includes a starting occasion connecting operation unit 11a, a normal occasion processing unit 11b, and a terminating occasion separating operation unit 11g. In addition, according to the embodiment, the control unit 11 duty-controls electric power supplied to the actuator 21 by the actuator drive circuit 13.

When engine starting begins, the starting occasion connecting operation unit 11a drives the actuator 21 to displace the moving intake pipes 30 in the direction of connection. For example, when the main switch 18 is made ON, the starting occasion connecting operation unit 11a drives the actuator 21 for a preset period of time (referred below to as starting occasion connecting operation time). Here, the starting occasion connecting operation time is time required for movement of the moving intake pipes 30 to the connected position Y from a position before displacement begins, and set, for example, at the stage of manufacture of the intake control device 10. In addition, according to the embodiment, before displacement at the starting begins, the moving intake pipes 30 are arranged between the connected position Y and the separated position X by a processing of the terminating occasion separating processing unit 11g described later.

Also, the starting occasion connecting operation unit 11a may decrease output torque of the actuator 21 in the course of movement in the direction of connection to reduce a moving speed of the moving intake pipes 30. For example, until a predetermined time, which is shorter than a starting occasion movement time, since the start of displacement, the actuator 21 may be driven at a predetermined duty ratio (referred below to as high duty ratio, for example, 100 %) and after the lapse of the predetermined time, the actuator 21 may be driven at a predetermined duty ratio, which is lower than the high duty ratio.

After the processing of the starting occasion connecting operation unit 11a is terminated, the normal occasion processing unit 11b performs a processing to drive the actuator 21 according to an operating state of a vehicle to vary an intake pipe length. The normal occasion processing unit 11b functionally includes a connected state maintaining unit 11c, a separating operation unit 11d, a separated state maintaining unit 11e, and a connecting operation unit 11f.

When the moving intake pipes 30 are stationary in the connected position Y, the connected state maintaining unit 11c drives the actuator 21 so as to energize the moving intake pipes 30 in the direction of connection. Specifically, when the processing by the starting occasion connecting operation unit 11a or the connecting operation unit 11f described later is terminated, the connected state maintaining unit 11c intermittently drives the actuator 21 to energize the moving intake pipes 30 in the direction of connection. For example, after the actuator 21 is driven for a predetermined time (referred below to as connecting direction energization time), the connected state maintaining unit 11c stops driving for a predetermined time (referred below to as stoppage time), which is longer than the connecting direction energization time, and thereafter repeats such driving and stoppage. At this time, the projections 22d of the upper levers 22 remain to abut against the column portions 41. Also, the spring 24b of the moving member 24 contracts so as to energize the moving intake pipes 30 downward (see Fig. 7(b)).

In addition, the connected state maintaining unit 11c may drive the actuator 21 in a manner to output a smaller torque than that at the time of movement of the moving intake pipes 30 by the connecting operation unit 11f described later. That is, the connected state maintaining unit 11c may make a duty ratio at the time of standstill of the moving intake pipes 30 lower than a duty ratio at the time of movement. Also, the actuator 21 may be fed at all times by the connected state maintaining unit 11c at a lower duty ratio than that at the time of movement of the moving intake pipes 30 by the connecting operation unit 11f.

When an operating state meets a predetermined condition (referred below to as separating operation starting condition), the separating operation unit 11d drives the actuator 21 so that the moving intake pipes 30 present in the connected position Y are moved to the separated position X. For example, in the case where an operating state meets a separation processing starting condition when the moving intake pipes 30 are put in a connected state, the separating operation unit 11d drives the actuator 21 for a preset time (referred below to as separating operation time) so that the moving intake pipes 30 are moved in the direction of separation. Here, the separating operation time is time required for movement of the moving intake pipes 30 to the separated position X from the connected position Y, and set, for example, at the stage of manufacture of the intake control device 10. Also, the separating operation starting condition is one, in which an engine rotating speed becomes not less than a preset speed (referred below to as condition speed) and a throttle opening degree having not less than a predetermined value (referred below to as condition opening degree) continues for a predetermined time or longer.

Also, like the starting occasion connecting operation unit 11a, the separating operation unit 11d may decrease output torque of the actuator 21 in the course of movement of the moving intake pipes 30 to decrease a moving speed of the moving intake pipes 30. That is, the separating operation unit 11d may drive the actuator 21 at a predetermined duty ratio (for example, 100 %) for a predetermined time, which is shorter than the separating operation time, and may drive the actuator 21 at a lower duty ratio than the predetermined duty ratio after the predetermined time lapses.

When the moving intake pipes 30 are stationary in the separated position X, the separated state maintaining unit 11e drives the actuator 21 so as to energize the moving intake pipes 30 in the direction of separation. Specifically, when the moving intake pipes 30 reach the separated position X as a result of the processing by the separating operation unit 11d, the separated state maintaining unit 11e intermittently drives the actuator 21 to energize the moving intake pipes 30 in the direction of separation. For example, after the actuator 21 is driven for a predetermined time (referred below to as separating direction energization time), the separated state maintaining unit 11e stops driving for the stoppage time described above, and thereafter repeats such driving and stoppage. At this time, the separating direction energization time may be determined to be shorter than the stoppage time. The actuator 21 energizes the moving intake pipes 30 whereby the projections 22c of the upper levers 22 abut against the column portions 41. Also, the spring 24b of the moving member 24 contracts so as to energize the moving intake pipes 30 upward (see Fig. 7(a)).

In addition, the separated state maintaining unit 11e may drive the actuator 21 in a manner to output a smaller torque than that at the time of movement of the moving intake pipes 30 in the direction of separation. That is, the separated state maintaining unit 11e may make a duty ratio at the time of standstill of the moving intake pipes 30 in the separated position X lower than a duty ratio at the time of movement. Also, the separated state maintaining unit 11c may supply the actuator 21 at all times with electric power, which is at a lower duty ratio than that at the time of movement.

When an operating state meets a predetermined condition (referred below to as connecting operation starting condition), the connecting operation unit 11f drives the actuator 21 for a preset time (referred below to as connecting operation time) so that the moving intake pipes 30 is moved in the direction of connection. Here, the connecting operation time is time required for movement of the moving intake pipes 30 to the connected position Y from the separated position X, and set, for example, at the stage of manufacture of the intake control device 10. Also, the connecting operation starting condition is one, in which an engine rotating speed becomes lower than the condition speed described above, or a throttle opening degree becomes smaller than the condition opening degree described above.

Also, like the separating operation unit 11d, the connecting operation unit 11f may decrease a moving speed of the moving intake pipes 30 in the course of movement thereof. That is, the connecting operation unit 11f may drive the actuator 21 at a predetermined duty ratio (for example, 100 %) for a predetermined time, which is shorter than the connecting operation time, and may drive the actuator 21 at a lower duty ratio than the predetermined duty ratio after the predetermined time lapses.

When an operation of the intake control device 10 is terminated, the terminating occasion separating operation unit 11g drives the actuator 21 to displace the moving intake pipes 30 in the direction of separation. Specifically, when the main switch 18 is made OFF, the terminating occasion separating operation unit 11g drives the actuator 21 for a preset period of time (referred below to as termination occasion separating operation time) so that the moving intake pipes 30 is moved in the direction of separation. Here, the termination occasion separating operation time is time required for movement of the moving intake pipes 30 to an intermediate position between the connected position Y and the separated position X from the connected position Y. Also, the termination occasion separating operation time is shorter than time, during which electric power is supplied from the holding circuit 15 after the main switch 18 is made OFF. The termination occasion separating operation time is set, for example, at the stage of manufacture of the intake control device 10. In this manner, when an operation of the intake control device 10 is terminated, the moving intake pipes 30 is arranged in the intermediate position whereby the sealing members 35 and the stationary intake pipes 40 are prevented from sticking to each other.

In addition, the terminating occasion separating operation unit 11g may drive the actuator 21 for the termination occasion separating operation time with electric power, which is at the same duty ratio as that at the time of movement of the moving intake pipes 30 by the separating operation unit 11d, or may drive the actuator 21 with electric power, which is at a smaller duty ratio than that at the time of movement.

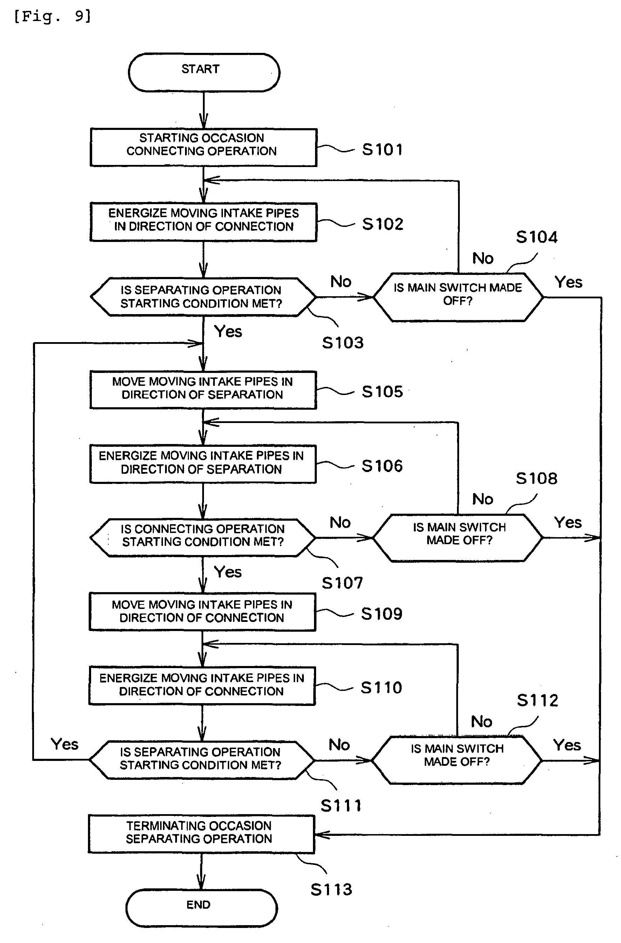

Here, an explanation is given to flow of the processing executed by the control unit 11. Fig. 9 is a flowchart illustrating an example of the processing executed by the control unit 11.

When the main switch 18 is made ON, the starting occasion connecting operation unit 11a drives the actuator 21 for the starting occasion connecting operation time (S101). Thereby, the moving intake pipes 30 are moved to the connected position Y. In addition, before the movement, the moving intake pipes 30 are arranged in the intermediate position between the connected position Y and the separated position X by the processing of the terminating occasion separating operation unit 11g at the time of traveling at the last time.

When the starting occasion connecting operation time lapses, the connected state maintaining unit 11c intermittently drives the actuator 21 to energize the moving intake pipes 30 in the direction of connection (S102). Also, the separating operation unit 11d detects the rotating speed of the engine 50 and a throttle opening degree to determine whether the separating operation starting condition has been met (S103). Here, in the case where the separating operation starting condition is not met, the terminating occasion separating operation unit 11g determines whether the main switch 18 has been made OFF (S104), and in case of being not made OFF, the processing returns to S102 and the connected state maintaining unit 11c continues to energize the moving intake pipes 30.

On the other hand, in S103, in the case where the separating operation starting condition is met, the separating operation unit 11d moves the actuator 21 for the separating operation time (S105). Thereby, the moving intake pipes 30 are moved to the separated position X. When the separating operation time lapses, the separated state maintaining unit 11e intermittently drives the actuator 21 to begin energizing the moving intake pipes 30 in the direction of separation (S108). Also, the connecting operation unit 11f detects an operating state to determine whether the connecting operation starting condition has been met (S107). Here, in the case where the connecting operation starting condition is not met, the terminating occasion separating operation unit 11g determines whether the main switch 18 has been made OFF (S108). In the case where the main switch 18 has not been made OFF, the processing returns to S106 and the separated state maintaining unit 11e continues to energize the moving intake pipes 30 in the direction of separation.

On the other hand, in S107, in the case where the connecting operation starting condition is met, the connecting operation unit 11f drives the actuator 21 for the connecting operation time (S109). Consequently, the moving intake pipes 30 are moved to the connected position Y. When the connecting operation time lapses, the connected state maintaining unit 11c intermittently drives the actuator 21 to energize the moving intake pipes 30 in the direction of connection (S110). Also, the separating operation unit 11d detects an operating state to determine whether the separating operation starting condition has been met (S111). Here, in the case where the separating operation starting condition is not met, whether the main switch 18 has been made OFF is determined (S112), and in case of having not been made OFF, the processing returns to S110, so that the connected state maintaining unit 11c continues to energize the moving intake pipes 30 in the direction of connection.

On the other hand, in S111, in the case where an operating state meets the separating operation starting condition, the processing returns to S105 and the separating operation unit 11d drives the actuator 21 for the separating operation time so that the moving intake pipes 30 are moved in the direction of separation.

In S104, S108, and S112, in the case where the main switch 18 is made OFF, the terminating occasion separating operation unit 11g drives the actuator 21 for the termination occasion separating operation time to move the moving intake pipes 30 in the direction of separation (S113). In addition, in S108, in the case where the main switch 18 is made OFF, the moving intake pipes 30 may be moved in the direction of separation for the termination occasion separating operation time in S113 after the moving intake pipes 30 present in the separated position X are moved in the direction of connection for the connecting operation time. By doing this, the moving intake pipes 30 are surely arranged in the intermediate position when an operation of the intake control device 10 is terminated.

With the intake control device 10 described above, when the moving intake pipes 30 are stationary in the connected position Y or the separated position X, the actuator 21 drives the moving intake pipes 30 in the direction of connection or in the direction of separation. Consequently, positional deviation of the moving intake pipes 30 is corrected and control of the moving intake pipes 30 is made simple without the provision of any potentiometer, which detects positions of the moving intake pipes 30.

In addition, the present teaching is not limited to the intake control device 10 described above but susceptible to various modifications. With the intake pipe length varying mechanism 14 described above, the moving intake pipes 30 translate in the same direction as a direction of intake in the stationary intake pipes 40. However, the moving intake pipes 30 may be turned in a circumferential direction to move between the connected position and the separated position

Also, in the case where the moving intake pipes 30 are present in the connected position Y or the separated position X, time intervals, at which the actuator 21 is driven, may be determined on the basis of a traveling state of the vehicle. The actuator 21 is driven at the time intervals whereby the moving intake pipes 30 may be repeatedly energized intermittently, that is, at the time intervals in the direction of connection or in the direction of separation. Here, a value indicative of a traveling state of the vehicle is, for example, an engine rotating speed and a throttle opening degree. Thereby, that frequency, at which the actuator 21 is driven, varies corresponding to those vibrations of a vehicle body, which increase or decrease according to a traveling state of the vehicle, so that the moving intake pipes 30 are stably maintained in the connected position Y or the separated position X irrespective of an increase and a decrease in vibrations of a vehicle body. Subsequently, an intake control device according to a further embodiment will be described. In addition, since the construction of the intake control device according to the embodiment is the same as the intake control device 10 described above, a detailed explanation with respect to the construction of the intake control device is omitted. Also, an explanation is given to an example of the case where a crank angle sensor 57 is made use of as a sensor, which detects the degree of those vibrations of a vehicle body, increase or decrease according to a traveling state of the vehicle.

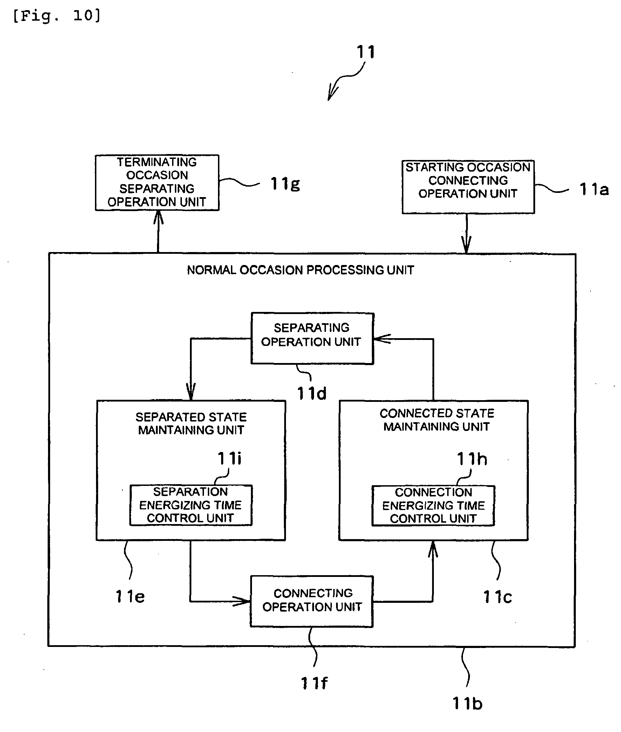

Fig. 10 is a functional block diagram illustrating a processing executed by a control unit 11 in the embodiment. In the embodiment, a connected state maintaining unit 11c includes a connection energizing time control unit 11h and a separated state maintaining unit 11e includes a separation energizing time control unit 11i.

When the moving intake pipes 30 are stationary in the connected position Y, the connection energizing time control unit 11h detects an engine rotating speed on the basis of a signal input from the crank angle sensor 57 to determine a time interval at which the actuator 21 is driven based on the engine rotating speed. That is, stoppage time (referred below to as connection energizing stoppage time) existing between a connecting direction energizing time, during which the actuator 21 is driven, and a subsequent connecting direction energizing time is determined. The processing by the connection energizing time control unit 11h is executed, for example, in the following manner.

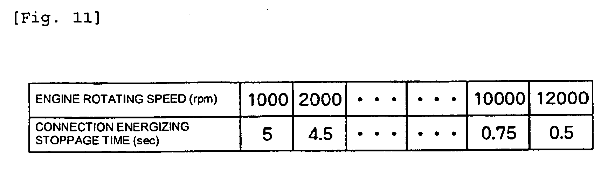

A table (referred below to as connection energizing control table), which gives a correspondency between connection energizing stoppage time and an engine rotating speed, is beforehand stored in a storage unit 12. The connection energizing time control unit 11h detects an engine rotating speed in a predetermined sampling cycle to refer to the connection energizing control table every detection to acquire that connection energizing stoppage time, which corresponds to the engine rotating speed. Fig. 11 is a view illustrating an example of the connection energizing control table stored in the storage unit 12. In this table, an upper stage indicates an engine rotating speed, a lower stage indicates connection energizing stoppage time, and the connection energizing stoppage time is set to become short as an engine rotating speed increases.

In addition, the processing by the connection energizing time control unit 11h is not limited thereto. For example, connection energizing stoppage time may be calculated by substituting that engine rotating speed, which is detected by the crank angle sensor 57, into an equation indicative of the relationship between an engine rotating speed and connection energizing stoppage time.

The connected state maintaining unit 11c drives the actuator 21 for the connecting direction energizing time to energize the moving intake pipes 30, and then stops driving of the actuator 21 for the connection energizing stoppage time acquired by the connection energizing time control unit 11h. Thereafter, the actuator 21 is again driven for the connecting direction energizing time, and then driving of the actuator 21 is again stopped for the connection energizing stoppage time. In this manner, the connected state maintaining unit 11c repeats such driving and stoppage of the actuator 21.

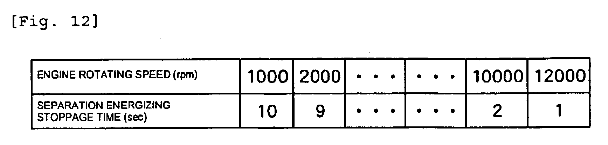

In the same manner as the processing of the connection energizing time control unit 11h, when the moving intake pipes 30 are stationary in the separated position X, the separation energizing time control unit 11i determines a time interval, at which the actuator 21 is driven on the basis of an engine rotating speed detected by the crank angle sensor 57. That is, stoppage time (referred below to as separation energizing stoppage time) existing between a separating direction energizing time, during which the actuator 21 is driven, and a subsequent separating direction energizing time is determined. For example, a table (referred below to as separation energizing control table), which gives a correspondency between separation energizing stoppage time and an engine rotating speed, is beforehand stored in the storage unit 12, and the separation energizing time control unit 11i refers to the separation energizing control table to acquire that separation energizing stoppage time, which corresponds to the engine rotating speed. Fig. 12 is a view illustrating an example of the separation energizing control table. In this table, an upper stage indicates an engine rotating speed, a lower stage indicates separation energizing stoppage time, and the separation energizing stoppage time is set to become short as an engine rotating speed increases.

In addition, like the connection energizing time control unit 11h, the separation energizing time control unit 11i may substitute that engine rotating speed, which is detected by the crank angle sensor 57, into an equation indicative of the relationship between an engine rotating speed and separation energizing stoppage time to calculate separation energizing stoppage time.

The separated state maintaining unit 11e drives the actuator 21 for the separating direction energizing time to energize the moving intake pipes 30, and then stops driving of the actuator 21 for the separation energizing stoppage time acquired by the separation energizing time control unit 11i. Thereafter, the actuator 21 is again driven for the separating direction energizing time, and then driving of the actuator 21 is again stopped for the separation energizing stoppage time. In this manner, the separated state maintaining unit 11e repeats such driving and stoppage of the actuator 21.

In addition, time, during which the connected state maintaining unit 11c drives the actuator 21, may be made longer than time, during which the separated state maintaining unit 11e drives the actuator 21. That is, connection energizing stoppage time may be set to be shorter than separation energizing stoppage time. For example, as illustrated in the connection energizing control table in Fig. 11 and the separation energizing control table in Fig. 12, the respective connection energizing stoppage times may be set to be shorter than separation energizing stoppage time, which is caused to correspond to an engine rotating speed equal thereto. Thereby, positions of the moving intake pipes 30 in the connected position Y are stably maintained as compared with the case where the moving intake pipes 30 are present in the separated position X. Consequently, in the case where the moving intake pipes 30 are present in the connected position Y, clearances between the moving intake pipes 30 and the stationary intake pipes 40 are sealed.

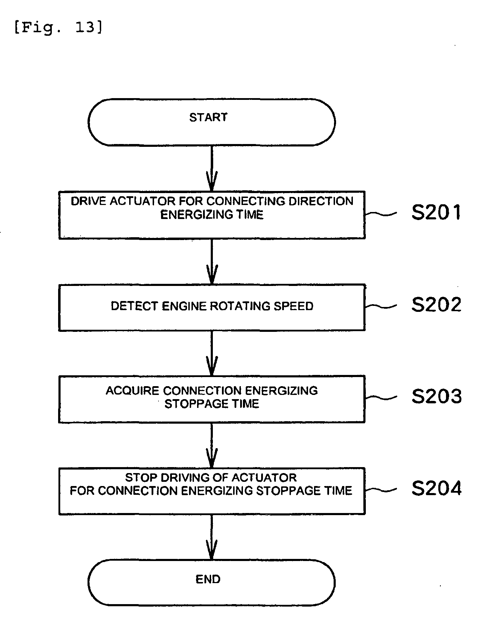

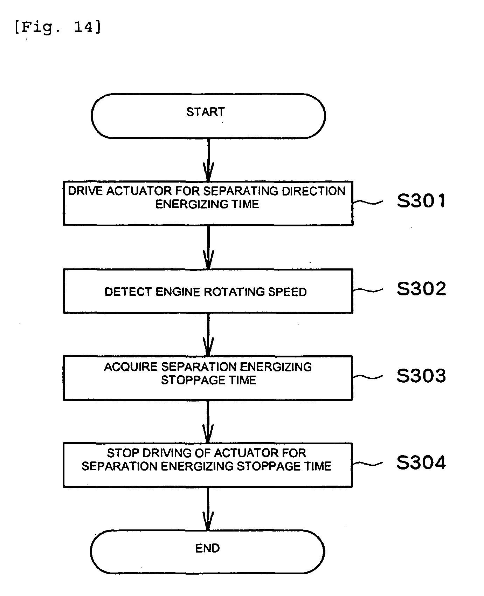

Here, an explanation is given to flow of the processing executed by the connected state maintaining unit 11c and the separated state maintaining unit 11e in the embodiment. Fig. 13 is a flowchart illustrating an example of the processing executed by the connected state maintaining unit 11c and illustrates examples of processings in S102 and S110 in the flowchart of Fig. 9. Fig. 14 is a flowchart illustrating an example of the processing executed by the separated state maintaining unit 11e and illustrates an example of processing in S106 in the flowchart of Fig. 9.

First, an explanation is given to the processing executed by the connected state maintaining unit 11c. The connected state maintaining unit 11c drives the actuator 21 for the connecting direction energizing time to energize the moving intake pipes 30 in the direction of connection (S201). Also, the connection energizing time control unit 11h detects an engine rotating speed (S202) to refer to the connection energizing control table stored in the storage unit 12 to acquire that connection energizing stoppage time, which corresponds to the engine rotating speed (S203).

Thereafter, the connected state maintaining unit 11c stops driving of the actuator 21 for the connection energizing stoppage time acquired by the connection energizing time control unit 11h (S204). The connected state maintaining unit 11c repeats the above processing until the separating operation unit 11d determines that the separating operation starting condition is met.

Subsequently, a processing of the separated state maintaining unit 11e will be described. The separated state maintaining unit 11e drives the actuator 21 for the separating direction energizing time to energize the moving intake pipes 30 in the direction of separation (S301). Also, the separation energizing time control unit 11i detects an engine rotating speed to refer to the separation energizing control table stored in the storage unit 12 (S302) to acquire that separation energizing stoppage time, which corresponds to the engine rotating speed (S303). Thereafter, the separated state maintaining unit 11e stops driving of the actuator 21 for the separation energizing stoppage time acquired by the separation energizing time control unit 11i (S304). The separated state maintaining unit 11e repeats the above processing until the connecting operation unit 11f determines that the connecting operation starting condition is met.

In addition, while it has been described that a correspondency is given between an engine rotating speed and connection energizing stoppage time in the connection energizing control table, for example, connecting direction energizing time may be caused to correspond to an engine rotating speed. In this case, it may be set so that the higher an engine rotating speed, the longer connecting direction energizing time, and the connecting direction energizing time may be constant. Likewise, it may be set in the connection and separation energizing control tables so that separating direction energizing time is caused to correspond to an engine rotating speed and the higher an engine rotating speed, the longer separating direction energizing time.

In order to solve such problem, an intake control device according to the present teaching comprises a stationary intake pipe contiguous to an intake port of an engine, a moving intake pipe, which moves relative to the stationary intake pipe to vary an intake pipe length, an actuator, which moves the moving intake pipe, and control means, which controls driving of the actuator. The moving intake pipe is inhibited from moving beyond a set position, which is beforehand set corresponding to an intake pipe length being set, in a direction, in which the moving intake pipe is moved, and the control means drives the actuator so that the moving intake pipe in the set position is energized in the direction of movement.

Also, a straddle-type vehicle according to the present teaching comprises the intake control device. Here, the straddle-type vehicle includes, for example, motorcycle (including a scooter), four-wheeled buggy, snowmobile, etc.

According to the present teaching, it is possible to control an actuator in a simple processing to prevent positional deviation of the moving intake pipe arranged in the set position, which is beforehand set corresponding to an intake pipe length.

According to an embodiment of the present teaching, the set position is a connected position, in which the moving intake pipe is connected to the stationary intake pipe, the moving intake pipe is provided to be movable in a direction of connection, in which it approaches the stationary intake pipe, and inhibited from moving beyond the connected position, and the control means drives the actuator so that the moving intake pipe in the connected position is energized in the direction of connection. According to the embodiment, it is possible to control the actuator in a simple processing to prevent positional deviation of the moving intake pipe arranged in the connected position. Also, according to the embodiment, a stopper, which inhibits the moving intake pipe from moving beyond the connected position, may be further provided.

Also, according to an embodiment of the present teaching, the set position is a separated position separated from the stationary intake pipe, the moving intake pipe is provided to be movable in a direction of separation, in which it separates from the stationary intake pipe, and inhibited from moving beyond the separated position, and the control means drives the actuator so that the moving intake pipe in the separated position is energized in the direction of separation. According to the embodiment, it is possible to control the actuator in a simple processing to prevent positional deviation of the moving intake pipe arranged in the separated position. Also, according to the embodiment, a stopper, which inhibits the moving intake pipe from moving beyond the separated position, may be further provided.

Also, according to an embodiment of the present teaching, when the moving intake pipe arranged in the set position is to be energized, the control means drives the actuator so that a smaller driving force than that when the moving intake pipe is moved in the direction of movement is output. According to the embodiment, it is possible to efficiently drive the actuator when the moving intake pipe arranged in the set position is to be energized.

Also, according to the invention, the control means drives the actuator so that the moving intake pipe in the set position is intermittently energized. According to the embodiment, it is possible to efficiently drive the actuator when the moving intake pipe arranged in the set position is to be energized. Also, according to the embodiment, traveling state detecting means, which detects a traveling state of a vehicle, may be further provided, and the control means may drive the actuator at time intervals determined on the basis of a traveling state of the vehicle detected by the traveling state detecting means. Thereby, it is possible to appropriately drive the actuator according to a traveling state of the vehicle to further stably maintain the moving intake pipe in the set position.

Also, according to an embodiment of the present teaching, the moving intake pipe is provided to be movable in a direction of connection, in which it approaches the stationary intake pipe, and in a direction of separation, in which it separates from the stationary intake pipe, and the control means drives the actuator so that the moving intake pipe is moved in the direction of separation when an operation of the intake control device is terminated. According to the embodiment, the moving intake pipe is separated from the stationary intake pipe whereby an operation of the intake control device is terminated in a state, in which a force generated between the moving intake pipe and the stationary intake pipe is cancelled at the time of connection, so that the intake control device is improved in durability.

In addition, according to the embodiment, the moving intake pipe may be provided to be movable between a connected position, in which it is connected to the stationary intake pipe, and a separated position, in which it is separated from the connected position, and the control means may drive the actuator so that the moving intake pipe is arranged between the connected position and the separated position when an operation of the intake control device is terminated.

The present description above discloses, in particular, in order to provide an intake control device capable of controlling an actuator in a simple processing, an embodiment of an intake control device which comprises stationary intake pipes contiguous to intake ports of an engine; moving intake pipes, which move relative to the stationary intake pipes; an actuator, which displaces the moving intake pipes; and a control unit, which controls driving of the actuator. The moving intake pipes are inhibited from moving beyond a set position, which is beforehand set, and the control unit drives the actuator so that the moving intake pipes in the set position is energized.

The present description further discloses, according to a first preferred aspect, an intake control device comprising a stationary intake pipe contiguous to an intake port of an engine, a moving intake pipe, which moves relative to the stationary intake pipe to vary an intake pipe length, an actuator, which moves the moving intake pipe, and control means, which controls driving of the actuator, and wherein the moving intake pipe is inhibited from moving beyond a set position, which is beforehand set corresponding to an intake pipe length being set, in a direction, in which the moving intake pipe is moved, and the control means drives the actuator so that the moving intake pipe in the set position is energized in the direction of movement.

Further, according to a second preferred aspect, the set position is a connected position, in which the moving intake pipe is connected to the stationary intake pipe, the moving intake pipe is provided to be movable in a direction of connection, in which it approaches the stationary intake pipe, and inhibited from moving beyond the connected position, and the control means drives the actuator so that the moving intake pipe in the connected position is energized in the direction of connection.

Further, according to a third preferred aspect, the intake control device according to the second preferred aspect, further comprises a stopper, which inhibits the moving intake pipe from moving beyond the connected position.

Further, according to a fourth preferred aspect, the set position is a separated position separated from the stationary intake pipe, the moving intake pipe is provided to be movable in a direction of separation, in which it separates from the stationary intake pipe, and inhibited from moving beyond the separated position, and the control means drives the actuator so that the moving intake pipe in the separated position is energized in the direction of separation.

Further, according to a fifth preferred aspect, the intake control device according to the fourth preferred aspect, further comprises a stopper, which inhibits the moving intake pipe from moving beyond the separated position.

Further, according to a sixth preferred aspect, when the moving intake pipe arranged in the set position is to be energized, the control means drives the actuator so that a smaller driving force than that when the moving intake pipe is moved in the direction of movement is output.

Further, according to the invention, the control means drives the actuator so that the moving intake pipe in the set position is intermittently energized.

Further, according to an eighth preferred aspect, the intake control device according to the seventh preferred aspect, further comprises traveling state detecting means, which detects a traveling state of a vehicle, and wherein the control means drives the actuator at time intervals determined on the basis of a traveling state of the vehicle detected by the traveling state detecting means.

Further, according to a ninth preferred aspect, the moving intake pipe is provided to be movable in a direction of connection, in which it approaches the stationary intake pipe, and in a direction of separation, in which it separates from the stationary intake pipe, and the control means drives the actuator so that the moving intake pipe is moved in the direction of separation when an operation of the intake control device is terminated.

Further, according to a tenth preferred aspect, the moving intake pipe is provided to be movable between a connected position, in which it is connected to the stationary intake pipe, and a separated position, in which it is separated from the connected position, and the control means drives the actuator so that the moving intake pipe is arranged between the connected position and the separated position when an operation of the intake control device is terminated.

Further, according to an eleventh preferred aspect, a straddle-type vehicle comprising the intake control device is provided according to the first preferred aspect.

## Claims

1. Intake control device for a straddle-type vehicle comprising:
a stationary intake pipe (40) contiguous to an intake port of an engine (50),
a moving intake pipe (30) configured to move relative to the stationary intake pipe (40),
an actuator (21) configured to displace the moving intake pipe (30),
a control unit (11) configured to control driving of the actuator (21), and
a means to inhibit the moving intake pipe from moving beyond a set position (X,Y), which is set beforehand,
wherein the control unit (11) is configured to drive the actuator (21) so that the moving intake pipe (30) in the set position is further energized in the direction towards the set position, **characterized in that**
the control means (11) is configured to drive the actuator (21) so that the moving intake pipe (30) in the set position is intermittently energized in the direction of the set position.

2. Intake control device according to claim 1, **characterized in that** the set position is a connected position (Y), in which the moving intake pipe (30) is connected to the stationary intake pipe (40), the moving intake pipe (30) is provided to be movable in a direction of connection, in which it approaches the stationary intake pipe (40), and to be inhibited from moving beyond the connected position (Y), and the control means (11) is configured to drive the actuator (21) so that the moving intake pipe (30) in the connected position (Y) is further energized in the direction of connection.

3. Intake control device according to claim 2, **characterized by** a stopper (22d), which is provided to inhibit the moving intake pipe (30) from moving beyond the connected position (Y).

4. Intake control device according to one of the claims 1 to 3, **characterized in that** the set position is a separated position (X) separated from the stationary intake pipe (40), the moving intake pipe (30) is provided to be movable in a direction of separation, in which it separates from the stationary intake pipe (40), and to be inhibited from moving beyond the separated position (X), and the control means (11) is configured to drive the actuator (21) so that the moving intake pipe (30) in the separated position (X) is energized in the direction of separation.

5. Intake control device according to claim 4, **characterized by** a stopper (22c) provided to inhibit the moving intake pipe (30) from moving beyond the separated position (X).

6. Intake control device according to one of the claims 1 to 5, **characterized in that** when the moving intake pipe (30) is arranged in the set position and is to be energized in the direction of the set position, the control means (11) is configured to drive the actuator (21) so that a smaller driving force than that when the moving intake pipe is moved in the direction of movement is output.

7. Intake control device according to one of the claims 1 to 6, **characterized by** a travelling state detecting means provided to detect a travelling state of a vehicle, wherein the control means (11) is configured to drive the actuator (21) at time intervals determined on the basis of a travelling state of the vehicle detected by the travelling state detecting means.

8. Intake control device according to one of the claims 1 to 7, **characterized in that** the moving intake pipe (30) is provided to be movable in a direction of connection, in which it approaches the stationary intake pipe (40), and in a direction of separation, in which it separates from the stationary intake pipe (40), and the control means (11) is configured to drive the actuator (21) so that the moving intake pipe (30) is moved in the direction of separation when an operation of the intake control device (10) is terminated.

9. Intake control device according to one of the claims 1 to 7, **characterized in that** the moving intake pipe (30) is provided to be movable between a connected position (Y), in which it is connected to the stationary intake pipe (40), and a separated position (X), in which it is separated from the connected position (Y), and the control means (11) is configured to drive the actuator (21) so that the moving intake pipe (30) is arranged between the connected position (Y) and the separated position (X) when an operation of the intake control device (10) is terminated.

10. Straddle-type vehicle comprising the intake control device according to one of the claims 1 to 9.

11. Method for controlling a length of an intake pipe connected to an engine of a straddle-type vehicle, said intake control device comprising a stationary intake pipe contiguous to an intake port of the engine, a moving intake pipe which moves relative to the stationary intake pipe, and an actuator which displaces the moving intake pipe, wherein the moving intake pipe is inhibited from moving beyond a set position, which is set beforehand, and, when the moving intake pipe is in the set position, the actuator is further intermittently energized so that the moving intake pipe is maintained in the set position.

## Patentansprüche

1. Einlasssteuerungsvorrichtung für ein Fahrzeug vom Spreizsitz- Typ, aufweisend:
ein stationäres Einlassrohr (40), fortgesetzt zu einer Einlassöffnung einer Brennkraftmaschine (50),
ein sich bewegendes Einlassrohr (30), konfiguriert, sich relativ zu dem stationären Einlassrohr (40) zu bewegen,
einen Betätiger (21), konfiguriert, das sich bewegende Einlassrohr (30) zu verlagern,
eine Steuerungseinheit (11), konfiguriert, das Antreiben des Betätigers (21) zu steuern, und
eine Einrichtung, das Bewegen des Einlassrohres am Bewegen über eine festgelegte Position (X, Y) hinaus, die vorher festgelegt ist, zu verbieten,
wobei die Steuerungseinheit (11) konfiguriert ist, den Betätiger (21) anzutreiben,
so dass das Bewegen des Einlassrohres (30) in der festgelegten Position weiter in die Richtung in Richtung zu der festgelegten Position angeregt wird, **dadurch gekennzeichnet, dass**
die Steuerungseinrichtung (11) konfiguriert ist, den Betätiger (21) anzutreiben, so dass das sich bewegende Einlassrohr (30) in der festgelegten Position intermittierend in die Richtung der festgelegten Position angeregt wird.

2. Einlasssteuerungsvorrichtung nach Anspruch 1, **dadurch gekennzeichnet, dass** die festgelegte Position eine verbundene Position (Y) ist, in der das sich bewegende Einlassrohr (30) mit dem stationären Einlassrohr (40) verbunden ist, wobei das sich bewegende Einlassrohr (30) vorgesehen ist, in einer Richtung der Verbindung bewegbar zu sein, in der es sich dem stationären Einlassrohr (40) nähert, und am Bewegen über die verbundenen Position (Y) hinaus verhindert zu sein, und die Steuerungseinrichtung (11) konfiguriert ist, den Betätiger (21) so anzutreiben, dass das sich bewegende Einlassrohr (30) in der verbundenen Position (Y) in der Verbindungsrichtung weiter angeregt wird.

3. Einlasssteuerungsvorrichtung nach Anspruch 2, **gekennzeichnet durch** einen Anschlag (22d), der vorgesehen ist, dem sich bewegenden Einlassrohr (30) das Bewegen über die verbundene Position (Y) hinaus zu verbieten.

4. Einlasssteuerungsvorrichtung nach einem der Ansprüche 1 bis 3, **dadurch gekennzeichnet, dass** die festgelegte Position eine getrennte Position (X) ist, getrennt von dem stationären Einlassrohr (40), das sich bewegende Einlassrohr (30) vorgesehen ist, in eine Richtung der Trennung, in der es sich von dem stationären Einlassrohr (40) trennt, bewegbar zu sein und am Bewegen über die getrennte Position (X) hinaus gehindert zu sein, und wobei die Steuerungseinrichtung (11) konfiguriert ist, den Betätiger (21) anzutreiben, so dass das sich bewegende Einlassrohr (30) in der getrennten Position (X) in Richtung der Trennung angeregt wird.

5. Einlasssteuerungsvorrichtung nach Anspruch 4, **gekennzeichnet durch** einen Anschlag (22c), vorgesehen dem sich bewegenden Einlassrohr (30) das Bewegen über die getrennte Position (X) hinaus zu verbieten.

6. Einlasssteuerungsvorrichtung nach einem der Ansprüche 1 bis 5, **dadurch gekennzeichnet, dass** dann, wenn das sich bewegende Einlassrohr (30) in der festgelegten Position angeordnet ist und in der Richtung der festgelegten Position angeregt werden soll, wobei die Steuerungseinrichtung (11) konfiguriert ist, den Betätiger (21) anzutreiben, so dass eine kleinere Antriebskraft als die, wenn das sich bewegende Einlassrohr (30) in Richtung der Bewegung bewegt wird, ausgegeben wird.

7. Einlasssteuerungsvorrichtung nach einem der Ansprüche 1 bis 6, **gekennzeichnet durch** eine Fahrzustand- Erfassungseinrichtung, vorgesehen, einen Fahrzustand eines Fahrzeuges zu erfassen, wobei die Steuerungseinrichtung (11) konfiguriert ist, den Betätiger (21) in Zeitintervallen, festgelegt auf der Grundlage eines Fahrzustandes des Fahrzeuges, festgelegt **durch** die Fahrzustand- Erfassungseinrichtung, anzutreiben.

8. Einlasssteuerungsvorrichtung nach einem der Ansprüche 1 bis 7, **dadurch gekennzeichnet, dass** das sich bewegende Einlassrohr (30) vorgesehen ist, bewegbar zu sein in einer Richtung der Verbindung, in der es sich dem stationären Einlassrohr (40) nähert, und in einer Richtung der Trennung, in der es sich von dem stationären Einlassrohr (40) trennt, und die Steuerungseinrichtung (11) konfiguriert ist, den Betätiger (21) so anzutreiben, dass das sich bewegende Einlassrohr (30) in Richtung der Trennung bewegt wird, wenn ein Betrieb der Einlasssteuerungsvorrichtung (10) beendet ist.

9. Einlasssteuerungsvorrichtung nach einem der Ansprüche 1 bis 7, **dadurch gekennzeichnet, dass** das sich bewegende Einlassrohr (30) vorgesehen ist, bewegbar zu sein zwischen einer verbundenen Position (Y), in der es mit dem stationären Einlassrohr (40) verbunden ist, und in einer getrennten Position (X), in der es von der verbundenen Position (Y) getrennt ist, und die Steuerungseinrichtung (11) konfiguriert ist, den Betätiger (21) so anzutreiben, dass das sich bewegende Einlassrohr (30) zwischen der verbundenen Position (Y) und der getrennten Position (X) angeordnet ist, wenn ein Betrieb der Einlasssteuerungsvorrichtung (10) beendet ist.

10. Fahrzeug vom Spreizsitz- Typ, aufweisend die Einlasssteuerungsvorrichtung nach einem der Ansprüche 1 bis 9.

11. Verfahren zum Steuern einer Länge des Einlassrohres, verbunden mit einer Brennkraftmaschine eines Fahrzeuges vom Spreizsitz- Typ, wobei die Einlasssteuerungsvorrichtung aufweist ein stationäres Einlassrohr (40), fortgesetzt zu einer Einlassöffnung der Brennkraftmaschine, ein sich bewegendes Einlassrohr (30), das sich relativ zu dem stationären Einlassrohr (40) bewegt, und einen Betätiger, der das sich bewegende Einlassrohr (30) verlagert, wobei das sich bewegende Einlassrohr (30) gehindert wird, sich über eine festgelegte Position, die vorher festgelegt ist, hinaus zu bewegen, und, wenn das sich bewegende Einlassrohr (30) in der festgelegten Position ist, der Betätiger außerdem intermittierend so angeregt wird, dass das sich bewegende Einlassrohr (30) in der festgelegten Position gehalten wird.

## Revendications

1. Dispositif de commande d'admission pour véhicule de type monté à califourchon, comprenant :
- un tuyau d'admission fixe (40) contigu à un orifice d'admission d'un moteur (50),
- un tuyau d'admission mobile (30) configuré pour se déplacer relativement au tuyau d'admission fixe (40),
- un actionneur (21) configuré pour déplacer le tuyau d'admission mobile (30),
- une unité de commande (11) configurée pour commander l'actionneur (21), et
- un moyen pour empêcher le tuyau d'admission mobile de se déplacer au-delà d'un position (X, Y) fixée, qui est fixée au préalable,
- dans lequel l'unité de commande (11) est configurée pour commander l'actionneur (21) de sorte que le tuyau d'admission mobile (30) dans la position fixée soit en outre sollicité électriquement dans la direction de la position fixée, **caractérisé en ce que** :
- le moyen de commande (11) est configurée pour commander l'actionneur (21) de sorte que le tuyau d'admission mobile (30) dans la position fixée soit sollicité électriquement de façon intermittente dans la direction de la position fixée.

2. Dispositif de commande d'admission selon la revendication 1, **caractérisé en ce que** la position fixée est une position (Y) connectée, dans laquelle le tuyau d'admission mobile (30) est connecté au tuyau d'admission fixe (40), le tuyau d'admission mobile (30) est prévu pour être mobile dans une direction de connexion, dans laquelle il s'approche du tuyau d'admission fixe (40), et pour être empêché de se déplacer au-delà de la position (Y) connectée et le moyen de commande (11) est configuré pour commander l'actionneur (21) de sorte que le tuyau d'admission mobile (30) dans la position (Y) connectée soit en outre sollicité électriquement dans la direction de connexion.

3. Dispositif de commande d'admission selon la revendication 2, **caractérisé par** un dispositif d'arrêt (22d) qui est prévu pour empêcher le tuyau d'admission mobile (30) de se déplacer au-delà de la position (Y) connectée.

4. Dispositif de commande d'admission selon l'une des revendications 1 à 3, **caractérisé en ce que** la position fixée est une position (X) séparée du tuyau d'admission fixe (40), le tuyau d'admission mobile (30) est prévu pour être mobile dans une direction de séparation, dans laquelle il se sépare du tuyau d'admission fixe (40), et pour être empêché de se déplacer au-delà de la position (X) séparée et le moyen de commande (11) est configuré pour commander l'actionneur (21) de sorte que le tuyau d'admission mobile (30) dans la position (X) séparée soit sollicité électriquement dans la direction de séparation.

5. Dispositif de commande d'admission selon la revendication 4, **caractérisé par** un dispositif d'arrêt (22c) prévu pour empêcher le tuyau d'admission mobile (30) de se déplacer au-delà de la position (X) séparée.

6. Dispositif de commande d'admission selon l'une des revendications 1 à 5, **caractérisé en ce que**, lorsque le tuyau d'admission mobile (30) est disposé dans la position fixée et est sur le point d'être sollicité électriquement dans la direction de la position fixée, le moyen de commande (11) est configuré pour commander l'actionneur (21) de sorte qu'une force d'entrainement plus petite que lorsque le tuyau d'admission mobile est déplacé dans la direction de déplacement soit exercée en sortie.

7. Dispositif de commande d'admission selon l'une des revendications 1 à 6, **caractérisé par** un moyen de détection d'état de déplacement prévu pour détecter un état de déplacement du véhicule, dans lequel le moyen de commande (11) est configuré pour commander l'actionneur (21) à des intervalles de temps déterminés en fonction d'un état de déplacement du véhicule détecté par le moyen de détection d'état de déplacement.

8. Dispositif de commande d'admission selon l'une des revendications 1 à 7, **caractérisé en ce que** le tuyau d'admission mobile (30) est prévu pour être mobile dans la direction de connexion, dans laquelle il s'approche du tuyau d'admission fixe (40), et dans la direction de séparation, dans laquelle il se sépare du tuyau d'admission fixe (40), et le moyen de commande (11) est configuré pour commander l'actionneur (21) de sorte que le tuyau d'admission mobile (30) soit déplacé dans la direction de séparation lorsque le fonctionnement du dispositif de commande d'admission (10) est terminé.

9. Dispositif de commande d'admission selon l'une des revendications 1 à 7, **caractérisé en ce que** le tuyau d'admission mobile (30) est prévu pour être mobile entre la position (Y) connectée, dans laquelle il est connecté au tuyau d'admission fixe (40), et la position (X) séparée, dans laquelle il est séparé de la position (Y) connectée, et le moyen de commande (11) est configuré pour commander l'actionneur (21) de sorte que le tuyau d'admission mobile (30) soit disposé entre la position (Y) connectée et la position (X) séparée lorsque le fonctionnement du dispositif de commande d'admission (10) est terminé.

10. Véhicule de type monté à califourchon comprenant un dispositif de commande d'admission selon l'une des revendications 1 à 9.

11. Procédé pour commander la longueur d'un tuyau d'admission connecté au moteur d'un véhicule de type monté à califourchon, ledit dispositif de commande d'admission comprenant un tuyau d'admission fixe contigu à un orifice d'admission du moteur, un tuyau d'admission mobile qui se déplace relativement au tuyau d'admission fixe et un actionneur qui déplace le tuyau d'admission mobile, pour lequel le tuyau d'admission mobile est empêché de se déplacer au-delà d'un position fixée, qui est fixée au préalable, et, lorsque le tuyau d'admission mobile est dans la position fixée, l'actionneur est en outre sollicité électriquement de façon intermittente de sorte que le tuyau d'admission mobile soit maintenu dans la position fixée.
